# EUROPEAN PATENT APPLICATION

(11) **EP 1 785 474 A1**
(43) Date of publication of application: **16.05.2007**
(21) Application number: 06023237.8
(22) Date of filing: 08.11.2006
(51) Int. Cl.: C10M 141/12, C10N 30/06, C10N 30/08, C10N 30/10, C10N 40/04

(54) **Lubricant composition**

(30) Priority: 09.03.2006 US 372176; 09.11.2005 US 734757 P
(71) Applicant: Afton Chemical Corporation, Richmond, VA 23219 (US)
(72) Inventor: DeGonia, David J., Midlothian, Virginia 23114 (US); Hewette, Chip, Richmond, Virginia 23238 (US); Sheets, Roger M., Glen Allen, Virginia 23060 (US); Phillips, Ronald L., Richmond, Virginia 23235 (US)
(74) Representative: Schwabe - Sandmair - Marx

(57) **Abstract**

There is disclosed a composition including a boron-containing compound, and at least one of a sulfur-containing, phosphorus-containing compound and its salt. Methods of making and using the composition are also disclosed.

## Description

### DESCRIPTION OF THE DISCLOSURE

### Related Applications

This application claims the benefit of priority of U.S. Provisional Application No. 60/734,757, filed on November 9, 2005.

### Field of the Disclosure

The present disclosure relates to a composition comprising a boron-containing compound; and at least one of a sulfur-containing, phosphorus-containing compound and its salt. Methods of using and making the composition are also disclosed.

### Background of the Disclosure

Although a substantial number of gear oils have been produced having various properties there exists a need for an additive or a combination of additives to provide at least one of improved antiwear, improved thermal stability, improved oxidative stability, improved fuel efficiency, improved temperature reduction, decreased noise, decreased wear, and decreased pitting. In particular, a need exists for an additive that can provide at least one of these properties to a gear, such as an axle, when the gear has not been broken-in for either some time period or for some distance. There is also a need for an additive that can provide at least one of these properties to a gear prior to towing a load.

Finally, a need exists for an additive that can meet at least one of the above-described properties and still meet the industry standards, such as the GL-5, SAE J2360, High Temperature Variation of ASTM D-6121 (L-37), and D-5704 L60-1.

### SUMMARY OF THE DISCLOSURE

In accordance with the disclosure, a lubricant composition comprising a boron-containing compound; and at least one of a sulfur-containing, phosphorus-containing compound and its salt.

In an aspect, there is disclosed a lubricant composition comprising a boron-containing compound and a reaction product of a sulfur-containing compound, a phosphorus-containing compound, and a nitrogen-containing compound.

In another aspect, there is also disclosed a method of making a lubricant composition comprising blending a boron-containing compound and at least one of a sulfur-containing, phosphorus-containing compound and its salt.

Additional objects and advantages of the disclosure will be set forth in part in the description which follows, and/or can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

### DESCRIPTION OF THE EMBODIMENTS

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);

(2) substituted hydrocarbon substituents, that is, substituents containing non-hydrocarbon groups which, in the context of this invention, do not alter the predominantly hydrocarbon substituent (e.g., halo (especially chloro and fluoro), hydroxy, alkoxy, mercapto, alkylmercapto, nitro, nitroso, and sulfoxy);

(3) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, for example no more than one, non-hydrocarbon substituent will be present for every ten carbon atoms in the hydrocarbyl group; typically, there will be no non-hydrocarbon substituents in the hydrocarbyl group.

As used herein, the term "percent by weight", unless expressly stated otherwise, means the percentage the recited component represents to the weight of the entire composition.

The composition disclosed herein can provide at least one property chosen from improved antiwear protection, improved thermal and oxidative stability. The composition can be a lubricant composition for use in gears, such as light duty axles and a stationary gearbox. It is believed that the disclosed composition can provide at least one of the above-described properties when the gears are subjected to low and high temperatures and/or variable load conditions. In an aspect, the disclosed composition can be applied to, e.g., an axle that has not been broken-in for some time period or distance prior to towing. In an aspect, a light duty axle can be a hypoid gear axle. In another aspect, the disclosed composition can be applied to light duty cars, trucks and sport utility vehicles with or without limited slip mechanisms in the differential experience to improve at least gear wear protection. The lubricant composition can be suitably used with any friction material such as paper, steel, or carbon fiber.

The composition disclosed herein can comprise a boron-containing compound; and at least one of a sulfur-containing, phosphorus-containing compound and its salt.

The boron-containing compound can be an inorganic or an organic compound. The inorganic compounds include the boron acids, anhydrides, oxides and halides. The organic boron compounds include the boron amides and esters. Also included are the borated acylated amines of (A) as well other borated acylated amines and borated dispersants, borated epoxides and the borated fatty acid esters of glycerol.

The boron compounds that are useful include boron oxide, boron oxide hydrate, boron trioxide, boron trifluoride, boron tribromide, boron trichloride, boron acids such as boronic acid (i.e., alkyl-B(OH)₂ or aryl-B(OH)₂), boric acid (i.e., H₃BO₃), tetraboric acid (i.e., H₂B₄O₇), metaboric acid (i.e., HBO₂), boron anhydrides, boron amides and various esters of such boron acids. Complexes of boron trihalide with ethers, organic acids, inorganic acids, or hydrocarbons can be used. Examples of such complexes include boron-trifluoride-triethyl ester, boron trifluoride-phosphoric acid, boron trichloride-chloroacetic acid, boron tribromide-dioxane, and boron trifluoridemethyl ethyl ether.

Specific examples of boronic acids include methyl boronic acid, phenylboronic acid, cyclohexyl boronic acid, p-heptylphenyl boronic acid and dodecyl boronic acid.

The boron acid esters include mono-, di-, and tri-organic esters of boric acid with alcohols or phenols such as, e.g., methanol, ethanol, isopropanol, cyclohexanol, cyclopentanol, 1-octanol, 2-octanol, dodecanol, behenyl alcohol, oleyl alcohol, stearyl alcohol, benzyl alcohol, 2-butyl cyclohexanol, ethylene glycol, propylene glycol, trimethylene glycol, 1,3-butanediol, 2,4-hexanediol, 1,2-cyclohexanediol, 1,3-octanediol, glycerol, pentaerythritol diethylene glycol, carbitol, Cellosolve, triethylene glycol, tripropylene glycol, phenol, naphthol, p-butylphenol, o,p-diheptylphenol, n-cyclohexylphenol, 2,2-bis-(p-hydroxyphenyl)-propane, polyisobutene (molecular weight of 1500)-substituted phenol, ethylene chlorohydrin, o-chlorophenol, m-nitrophenol, 6-bromooctanol, and 7-keto-decanol. Lower alcohols, 1,2-glycols, and 1-3-glycols, i.e., those having less than about 8 carbon atoms can be useful for preparing the boric acid esters.

Methods for preparing the esters of boron acid are known and disclosed in the art. Thus, one method involves the reaction of boron trichloride with 3 moles of an alcohol or a phenol to result in a tri-organic borate. Another method involves the reaction of boric oxide with an alcohol or a phenol. Another method involves the direct esterification of tetra boric acid with 3 moles of an alcohol or a phenol. Still another method involves the direct esterification of boric acid with a glycol to form, e.g., a cyclic alkylene borate.

In an aspect, the boron-containing compound can be a borated nitrogen-containing compound, including, but not limited to the nitrogen-containing compounds disclosed below. For example, the nitrogen-containing compound can be used to produce a succinimide dispersant. Non-limiting examples of a nitrogen-containing compound include triethylene tetramine, tetraethylene pentamine, pentaethylene hexamine, and mixtures thereof. In an aspect, a borated nitrogen-containing compound can be a dispersant. Suitable dispersants include alkenyl succinimides, alkenyl succinic acid esters, alkenyl succinic ester-amides, Mannich bases, hydrocarbyl polyamines, or polymeric polyamines.

The alkenyl succinimides in which the succinic group contains a hydrocarbyl substituent containing at least 30 carbon atoms are described for example in U.S. Pat. Nos. 3,172,892; 3,202,678; 3,216,936; 3,219,666; 3,254,025; 3,272,746; and 4,234,435. The alkenyl succinimides can be formed by conventional methods such as by heating an alkenyl succinic anhydride, acid, acid-ester, acid halide, or lower alkyl ester with a polyamine containing at least one primary amino group. The alkenyl succinic anhydride can be made readily by heating a mixture of olefin and maleic anhydride to, for example, about 180-220° C. The olefin can be a polymer or copolymer of a lower mono-olefin such as ethylene, propylene, 1-butene, isobutylene and the like and mixtures thereof. An exemplary source of alkenyl group is from polyisobutylene having a gel permeation chromatography (GPC) number average molecular weight of up to 10,000 or higher, for example in the range of about 500 to about 2,500, and as a further example in the range of about 800 to about 1,500. In an aspect, the polyisobutylene can have a molecular weight ranging from about 700 to about 5000. The polyisobutylene succinic anhydride to amine ratio can range from about 1.4 to about 3, and as a further example from about 1.8 to about 2.2.

In an aspect, a capping agent can be added. For example, an additional amount of maleic anhydride can be added to function as a capping agent for the basic nitrogen thereby reducing the basic nitrogen to a non-basic species.

As used herein the term "succinimide" is meant to encompass the completed reaction product from reaction between one or more polyamine reactants and a hydrocarbon-substituted succinic acid or anhydride (or like succinic acylating agent), and is intended to encompass compounds wherein the product may have amide, amidine, and/or salt linkages in addition to the imide linkage of the type that results from the reaction of a primary amino group and an anhydride moiety. In an aspect, the boron-containing compound is a borated succinimide dispersant.

In another aspect, the boron-containing compound can be a borated phosphorus-containing compound. For example, the borated phosphorus-containing compound can be a dispersant. The phosphorus-containing compound can be a phosphorous acid. The amount of phosphorus compound employed ranges from about 0.001 mole to 0.999 mole per mole of basic nitrogen and free hydroxyl in the reaction mixture up one half of which may be contributed by an auxiliary nitrogen compound.

The phosphorus-containing dispersants can comprise at least one oil-soluble ashless dispersant having a basic nitrogen and/or at least one hydroxyl group in the molecule. The dispersants can be phosphorylated by procedures described, for example, in U.S. Pat. Nos. 3,184,411; 3,342,735; 3,403,102; 3,502,607; 3,511,780; 3,513,093; 3,513,093; 4,615,826; 4,648,980; 4,857,214 and 5,198,133.

Methods for borating (boronating) the various types of ashless dispersants described above are described in U.S. Pat. Nos. 3,087,936; 3,254,025; 3,281,428; 3,282,955; 2,284,409; 2,284,410; 3,338,832; 3,344,069; 3,533,945; 3,658,836; 3,703,536; 3,718,663; 4,455,243; and 4,652,387.

Procedures for phosphorylating and borating ashless dispersants such as those referred to above are set forth in U.S. Pat. Nos. 4,857,214 and 5,198,133.

The boron-containing compound can be present in the lubricant composition in any desired or effective amount. In an aspect, the boron-containing compound can be present in the lubricant composition in an amount ranging from about 5 to about 500 ppm, and for example from about 10 ppm to about 500 ppm, relative to the total weight of the composition.

The composition disclosed herein can comprise at least one of a sulfur-containing, phosphorus-containing compound and/or its salt, such as at least one of a compound of formulae (II), (III), (V), and (VI), as shown below. The lubricant composition disclosed herein can also comprise a base oil. 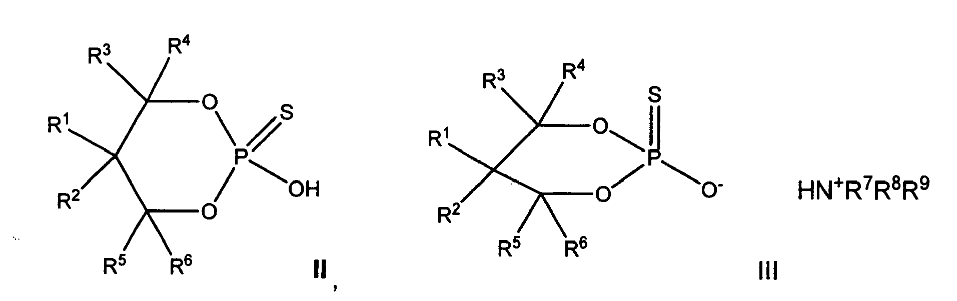 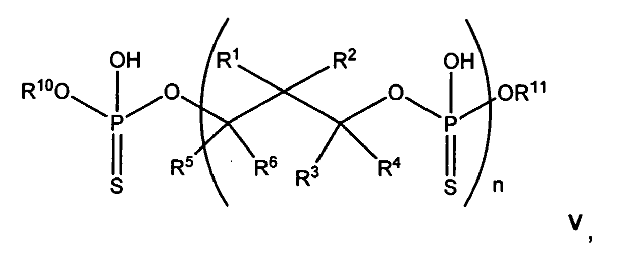 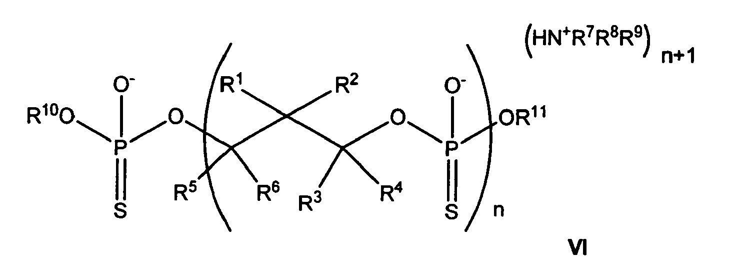 wherein n is an integer from 1 to 5; and
wherein R¹, R², R³, R⁴, R⁵, R⁶, R⁷, R⁸, R⁹, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms.

One of ordinary skill in the art would understand how to make any of the disclosed compounds. For example, a process for making at least one of a compound of formulae (III) and (VI) can comprise providing a sulfur-containing compound, a nitrogen-containing compound, and a phosphorus-containing compound. In an aspect, the nitrogen-containing compound is an amide and the process can yield at least one of a compound of formulae (II) and (V), which can be reacted, mixed, and/or combined with an additional nitrogen-containing compound, such as an amine, to yield at least one of a compound of formulae (III) and (VI). In another aspect, the nitrogen-containing compound can be an amine and the reaction, mixture and/or combination can result in complete conversion to a salt, such as the compounds of formulae (III) and (VI).

A phosphorus-containing compound, such as a phosphite or a phosphate can be used in the processes disclosed herein. Methods of making both phosphites and phosphates are known. For example, phosphites can be made by reacting either phosphorous acid or different phosphites with various alcohols. Another synthesis method includes reacting phosphorus trichloride with an excess of alcohol. Moreover, cyclic phosphites can be made by transesterification of phosphites with glycols, which can result in a mixture of monomeric and polymeric products. See Oswald, Alexis A., "Synthesis of Cyclic Phosphorous Acid Esters by Transesterification," Can. J. Chem., 37:1498-1504 (1959); and Said, Musa A., et al., "Reactivity of Cyclic Arsenites and Phosphites: X-ray structures of bis (5,5-dimethyl-1,3,2,-diosarsenan-2-yl)ether and bis (2,4,8,10-tetra-tert-butyl-12H-dibenzo[d,g][1,3,2]dioxarsenodn-6-yl)ether," J. Chem. Soc., 22:2945-51 (1995), the disclosures of which are hereby incorporated by reference. Methods for making cyclic hydrogen thiophosphites are also known, such as by reacting a cyclic chlorophosphite with hydrogen sulfide in the presence of pyridine. See Zwierzak, A., "Cyclic organophosphorus compounds. I. Synthesis and infrared spectral studies of cyclic hydrogen phosphites and thiophosphites, Can. J. Chem., 45:2501-12 (1967), the disclosure of which is hereby incorporated by reference.

In an aspect, the phosphite can be a di- or tri-hydrocarbyl phosphite: Each hydrocarbyl group can have from about 1 to about 24 carbon atoms, or from 1 to about 18 carbon atoms, or from about 2 to about 8 carbon atoms. Each hydrocarbyl group can be independently alkyl, alkenyl, aryl, and mixtures thereof. When the hydrocarbyl group is an aryl group, then it can contain at least about 6 carbon atoms; or from about 6 to about 18 carbon atoms. Non-limiting examples of the alkyl or alkenyl groups include propyl, butyl, hexyl, heptyl, octyl, oleyl, linoleyl, stearyl, etc. Non-limiting examples of aryl groups include phenyl, naphthyl, heptylphenol, etc. In an aspect, each hydrocarbyl group can be independently methyl, propyl, butyl, pentyl, hexyl, heptyl, oleyl or phenyl, for example methyl, butyl, oleyl or phenyl, and as a further example methyl, butyl, oleyl, or phenyl.

Non-limiting examples of useful phosphites include dibutyl hydrogen phosphonate, diisobutyl hydrogen phosphonate, dioleyl hydrogen phosphonate, di(C₁₄₋₁₈) hydrogen phosphonate, triphenyl phosphite, a dihydrocarbyl phosphite such as a compound of formula (I), and a polymeric phosphite, such as a compound of formula (IV), both of which are shown below. 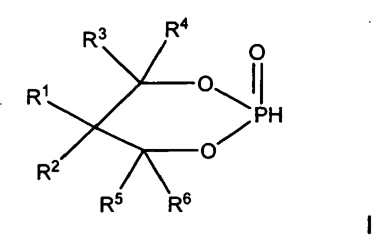 and 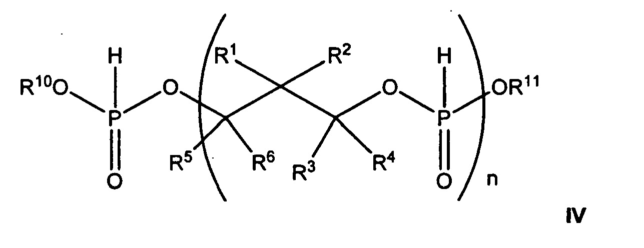 wherein n is an integer from about 1 to about 5; and
wherein R¹, R², R³, R⁴, R⁵, R⁶, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms. In an aspect, if n is an integer greater than about 5, it is believed, without being limited to any particular theory, that the repeating unit will not completely sulfurize.

In an aspect, in the compound of formula (I), R³, R⁴, R⁵, and R⁶ can be hydrogen; and R¹ and R² can be methyl. This compound is commonly referred to as neopentyl glycol phosphite (NPGP) and is registered with Chemical Abstracts Select under the designation CAS # 4090-60-2 (5,5-dimethyl-1,3,2-dioxaphosphorinan-2-one). In an aspect, in the compound of formula (IV), R¹ and R² can be methyl; R³, R⁴, R⁵, and R⁶ can be hydrogen; and R¹⁰ and R¹¹ can be alkyl groups comprising from about 1 to about 6 carbon atoms. This compound is a polymeric by-product of the manufacturing process of neopentyl glycol phosphite.

The phosphorus-containing compound can also be at least one of a phosphoric acid ester or salt thereof, a reaction product of a phosphorus acid or anhydride and an unsaturated compound, and mixtures of two or more thereof.

A metal dithiophosphate can be prepared by reacting a metal base with at least one thiophosphorus acids, which can be mono- or dithiophosphorus acids.

The phosphorus acid or anhydride can be reacted with an unsaturated compound, including but not limited to, amides, esters, acids, anhydrides, and ethers.

In an aspect, the phosphorus-containing compound, such as a phosphite, can comprise various functional groups that increase the steric hindrance of the compound and therefore increase its resistance to thermal decomposition. In an aspect, the phosphorus-containing compound can be branched at the position beta to the oxygen atom in the hydrocarbyl chain. It is believed that branching at this beta carbon can change, e.g., can improve, the thermal stability of the phosphorus-containing compound in a lubricant composition.

Moreover, the phosphorus-containing compound can be made using components that would increase the resultant compound's steric hindrance. For example, the alcohol used to make, for example, the phosphite can be a beta-branched alcohol. Non-limiting examples of beta-branched alcohols include isobutanol, 2-ethylhexanol, neopentyl glycol, neopentyl alcohol, pristanol, and methyl isobutyl carbinol (MIBC).

The disclosed phosphorus-containing compound can be used as a starting material to yield a sulfur-containing, phosphorus-containing compound. In an aspect, the process for making a sulfur-containing, phosphorus-containing compound can comprise providing a phosphorus-containing compound, such as those described above, a sulfur-containing compound, and a nitrogen-containing compound to yield the sulfur-containing, phosphorus-containing compound. The sulfur-containing, phosphorus-containing compound can provide improved antiwear properties as compared to non-sulfur-containing, phosphorus-containing compounds. In another aspect, there is disclosed a composition comprising a boron-containing compound and a reaction product of a phosphorus-containing compound, such as a neopentyl glycol phosphite; a sulfur-containing compound; and a nitrogen-containing compound.

The sulfur-containing compound can be any compound that comprises free and/or active sulfur. Non-limiting examples of sulfur-containing compounds include sulfurized animal or vegetable fats or oils, sulfurized animal or vegetable fatty acid esters, fully or partially esterified esters of trivalent or pentavalent acids of phosphorus, sulfurized olefins, dihydrocarbyl polysulfides, sulfurized Diels-Alder adducts, sulfurized dicyclopentadiene, sulfurized or co-sulfurized mixtures of fatty acid esters and monounsaturated olefin, co-sulfurized blends of fatty acid, fatty acid ester and α-olefin, functionally-substituted dihydrocarbyl polysulfides, thio-aldehydes, thio-ketones and derivatives thereof (e.g., acids, esters, imines, or lactones), epithio compounds, sulfur-containing acetal derivatives, co-sulfurized blends of terpene and acyclic olefins, polysulfide olefin products, and elemental sulfur.

In an aspect, the sulfur-containing compound can be made by reacting an olefin, such as isobutene, with sulfur. The product, e.g., sulfurized isobutylene or sulfurized polyisobutylene, typically has a sulfur content of 10 to 55%, for example 30 to 50% by weight. A wide variety of other olefins or unsaturated hydrocarbons, e.g., isobutene dimer or trimer, can be used to form such sulfur-containing compounds.

In another aspect, polysulfides composed of one or more compounds represented by the formula: R²⁰ -Sₓ -R²¹ where R²⁰ and R²¹ can be hydrocarbyl groups each of which can contain from about 3 to about 18 carbon atoms and x can be in the range of from about 2 to about 8, for example in the range of from about 2 to about 5, and as a further example can be 3. The hydrocarbyl groups can be of widely varying types such as alkyl, cycloalkyl, alkenyl, aryl, or aralkyl. Tertiary alkyl polysulfides such as di-tert-butyl trisulfide, and mixtures comprising di-tert-butyl trisulfide (e.g., a mixture composed principally or entirely of the tri, tetra-, and pentasulfides) can be used. Examples of other useful dihydrocarbyl polysulfides include the diamyl polysulfides, the dinonyl polysulfides, the didodecyl polysulfides, and the dibenzyl polysulfides.

The sulfur-containing compound can be used in at least an equimolar or greater amount per equivalent of phosphorus-containing compound. In an aspect, from about 1 to about 1.5 molar equivalents of the sulfur-containing compound can be used.

The nitrogen-containing compound can be any nitrogen-containing compound, such as an amide of the structure R³CONR⁴R⁵ wherein R³, R⁴ and R⁵ can be each independently hydrogen or a hydrocarbyl group containing from about 1 to about 30 carbon atoms or an ethoxylated amide of the structure 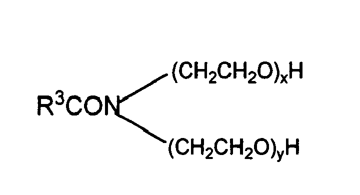 wherein the sum of x and y can be from about 1 to about 50, for example from about 1 to about 20, and as a further example from about 1 to about 10. In an aspect, when R³, R⁴ and R⁵ are hydrocarbyl groups, they contain from about 1 to about 18 carbon atoms and for example from about 1 to about 6 carbon atoms.

When R³ is hydrogen and R⁴ and R⁵ are hydrocarbyl groups, the nitrogen-containing compound is a dihydrocarbyl formamide. Non-limiting examples of dihydrocarbylformamides having utility herein include: dimethylformamide, diethylformamide, dipropylformamide, methylethylformamide, dibutylformamide, methylbutylformamide, ethylbutylformamide, dioleylformamide, distearylformamide, didecylformamide, ditridecylformamide, decyltridecylformamide, decyloleylformamide, and tridecyloleylformamide, etc.

When R³ is a hydrocarbyl group and R⁴ and R⁵ are both hydrogen, the nitrogen-containing compound is a primary hydrocarbyl amide. Non-limiting examples of primary hydrocarbyl amides include acetamide, propionamide, butyramides, valeramide, lauramide, myristamide and palmitamide. Some commercial simple fatty acid amides are available from Armak Company: coco fatty amide, octadecanamide, hydrogenated tallow fatty amide, oleamide, and 13-docosenamide.

When R³ and R⁴ are both hydrocarbyl groups and R⁵ is hydrogen, the nitrogen-containing compound is an N-substituted amide. Non-limiting examples of N-substituted amides include N-methylacetamide, N-ethylacetamide, N-methylvaleramide, N-propyllauramide, N-methyloleamide and N-butylstearamide.

When R³, R⁴ and R⁵ are all hydrocarbyl groups, the nitrogen-containing compound is an N,N-disubstituted amide. Non-limiting examples of N,N-disubstituted amides include N,N-dimethylacetamide, N-methyl-N-ethylacetamide, N,N-diethylpropionamide, N,N-dibutylvaleramide, N,N-diethylstearamide, and N,N-dimethyloleamide.

Additional non-limiting examples of the nitrogen-containing compound include N,N-bis(2-hydroxyethyl)dodecanamide, N,N-bis(2-hydroxyethyl) coco fatty acid amide, N,N-bis(2-hydroxyethyl)oleamide, N-2-hydroxyethylcocamide, and N-2-hydroxyethylstearamide.

The nitrogen-containing compound can be present in any amount that drives the sulfurization of the phosphorus-containing compound. In an aspect, the nitrogen-containing compound can be present in an amount ranging from about 0.05 to about 2, for example from about 1 to about 1.5 molar equivalents.

In an aspect, the sulfur-containing, phosphorus-containing compound can be at least one of a compound of formulae (II) and (V): 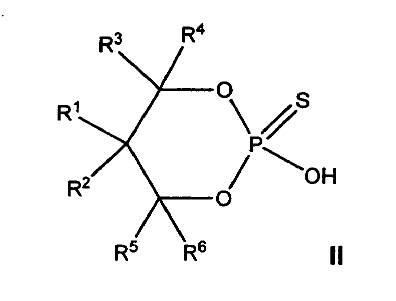 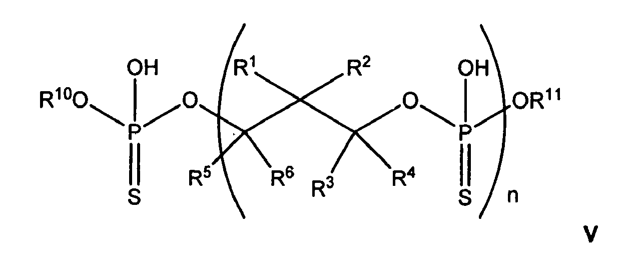 wherein n is an integer from 1 to 5; and
wherein R¹, R², R³, R⁴, R⁵, R⁶, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms.

In an aspect, in formula (II), R¹ and R² can be methyl; and R³, R⁴, R⁵, and R⁶ can be hydrogen. In another aspect, in formula (V), R¹ and R² can be methyl; R³, R⁴, R⁵, and R⁶ can be hydrogen; and R¹⁰ and R¹¹ can be alkyl groups comprising from about 1 to about 6 carbon atoms.

There is also disclosed a process for making a salt. In particular, an additional nitrogen-containing compound can be provided to the sulfur-containing, phosphorus-containing compound to yield a salt. The additional nitrogen-containing compound can be different from the nitrogen-containing compound discussed above in relation to making the sulfur-containing, phosphorus-containing compound. Alternatively, another process for making a salt of the sulfur-containing, phosphorus-containing compound can comprise providing a nitrogen-containing compound, such as an amine, a sulfur-containing compound, and a phosphorus-containing compound, wherein the conversion to the salt is complete. The salt of a sulfur-containing, phosphorus-containing compound, such as a salt of neopentyl glycol phosphite, can have improved antiwear as compared to a sulfur-containing, phosphorus-containing compound, and a non-sulfur-containing, phosphorus-containing compound.

The disclosed process can include the use of solvents. The solvent can be any inert fluid substance in which at least one of the reactants is soluble or the product is soluble. Non-limiting examples include benzene, toluene, xylene, n-hexane, cyclohexane, naphtha, diethyl ether carbitol, dibutyl ether dioxane, chlorobenzene, nitrobenzene, carbon tetrachloride, chloroform, base oil, such as gas-to-liquid and polyalphaolefin, and process oil.

The nitrogen-containing compound can help neutralize any acids. Any nitrogen-containing compound can be used so long as it is soluble in the fully formulated lubricant composition, which can comprise a base oil. Non-limiting examples of the nitrogen-containing compound include an amide, an amine, and a heterocyclic compound comprising a basic nitrogen, such as pyridine. In an aspect, the additional nitrogen-containing compound is an amine, which can be primary, secondary, or tertiary.

In an aspect, the hydrocarbyl amines can be primary hydrocarbyl amines comprising from about 4 to about 30 carbon atoms in the hydrocarbyl group, and for example from about 8 to about 20 carbon atoms in the hydrocarbyl group. The hydrocarbyl group can be saturated or unsaturated. Representative examples of primary saturated amines are those known as aliphatic primary fatty amines. Typical fatty amines include alkyl amines such as n-hexylamine, n-octylamine, n-decylamine, n-dodecylamine, n-tetradecylamine, n-pentadecylamine, n-hexadecylamine, n-octadecylamine (stearyl amine), etc. These primary amines are available in both distilled and technical grades. While the distilled grade can provide a purer reaction product, amides and imides can form in reactions with the amines of technical grade. Also suitable are mixed fatty amines.

In an aspect, the amine salts of the disclosed compounds can be those derived from tertiary-aliphatic primary amines having at least about 4 carbon atoms in the alkyl group. For the most part, they can be derived from alkyl amines having a total of less than about 30 carbon atoms in the alkyl group.

Usually the tertiary aliphatic primary amines are monoamines represented by the formula 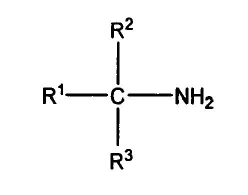 wherein R¹, R², and R³ can be the same or different and can be a hydrocarbyl group containing from about one to about 30 carbon atoms. Such amines are illustrated by tertiary-butyl amine, tertiary-hexyl primary amine, 1-methyl-1-amino-cyclohexane, tertiary-octyl primary amine, tertiary-decyl primary amine, tertiary-dodecyl primary amine, tertiary-tetradecyl primary amine, tertiary-hexadecyl primary amine, tertiary-octadecyl primary amine, tertiary-tetracosanyl primary amine, tertiary-octacosanyl primary amine.

Mixtures of amines are also useful for the purposes of this disclosure. Illustrative of amine mixtures of this type can be a mixture of C₈ -C₁₆ tertiary alkyl primary amines and a similar mixture of C₁₄ -C₂₄ tertiary alkyl primary amines. The tertiary alkyl primary amines and methods for their preparation are well known to those of ordinary skill in the art and, therefore, further discussion is unnecessary. The tertiary alkyl primary amine useful for the purposes of this disclosure and methods for their preparation are described in U.S. Pat. No. 2,945,749, which is hereby incorporated by reference for its teaching in this regard.

Primary amines in which the hydrocarbon chain comprises olefinic unsaturation also can be quite useful. Thus, the R groups can contain at least one olefinic unsaturation depending on the length of the chain, usually no more than one double bond per 10 carbon atoms. Representative amines are dodecenylamine, myristoleylamine, palmitoleylamine, oleylamine and linoleylamine.

Secondary amines include dialkylamines having two of the above alkyl groups including fatty secondary amines, and also mixed dialkylamines where R' can be a fatty amine and R" can be a lower alkyl group (1-9 carbon atoms) such as methyl, ethyl, n-propyl, i-propyl, butyl, etc., or R" can be an alkyl group bearing other nonreactive or polar substituents (CN, alkyl, carbalkoxy, amide, ether, thioether, halo, sulfoxide, sulfone). The fatty polyamine diamines can include mono-or dialkyl, symmetrical or asymmetrical ethylene diamines, propane diamines (1,2, or 1,3), and polyamine analogs of the above. Suitable fatty polyamines include N-coco-1,3-diaminopropane, N-soyaalkyl trimethylenediamine, N-tallow-1,3-diaminopropane, and N-oleyl-1,3-diaminopropane.

The nitrogen-containing compound can be provided in any amount necessary to drive the disclosed process to completion, i.e., if enough nitrogen-containing compound is not present then the phosphorus-containing compound does not completely sulfurize. In an aspect, the nitrogen-containing compound can be provided in an amount ranging from about 0.05 to about 2, and for example, from about 1 to about 1.5 molar equivalent per equivalent of phosphorus-containing compound.

The disclosed process can occur at about room temperature (23°C) or above, for example at least about 50°C, and as a further example ranging from about 50°C to about 90°C. Generally, mixing at room temperature for a period ranging from about 1 minute to about 8 hours can be sufficient.

Methods for the preparation of such salts are well known and reported in the literature. See for example, U.S. Pat. Nos. 2,063,629; 2,224,695; 2,447,288; 2,616,905; 3,984,448; 4,431,552; 5,354,484; Pesin et al, Zhurnal Obshchei Khimii, 31(8): 2508-2515 (1961); and PCT International Application Publication No. WO 87/07638, the disclosures of which are hereby incorporated by reference.

The salt of the sulfur-containing, phosphorus-containing compound can be formed separately and then added to a lubricating or functional fluid composition. Alternatively, the salt can be formed when the phosphorus-containing compound, such as the disclosed phosphite, is blended with other components to form the lubricating or functional fluid composition. However, if the salt is formed *in situ* then it is important to restrict the acids, such as anti-rust components, present in the composition because the acids can react with the nitrogen-containing compound and stop the sulfurization and salt formations.

The salt of a sulfur-containing, phosphorus-containing compound can be oil-soluble, i.e., the hydrocarbyl chains of the salt can be of sufficient length, such as at least six carbon atoms, so that the resultant compound is soluble in a formulated composition. The incorporation of hydrophobic groups can lead to an increase in solubility in a non-polar media. Non-limiting examples of a salt of a sulfur-containing, phosphorus-containing compound include diisobutyl thiophosphoric acid C₈₋₁₆ tertiary alkyl primary amine salt, di-2-ethylhexyl-thiophosphoric acid C₈₋₁₆ tertiary alkyl primary amine salt, and neopentyl glycol thiophosphoric acid C₈₋₁₆ tertiary alkyl primary amine salt. In an aspect, there is contemplated a salt of a dithiophosphoric acid. In another aspect, the salt of the sulfur-containing, phosphorus-containing compound can be at least one of a compound of formulae (III) and (VI) shown below. 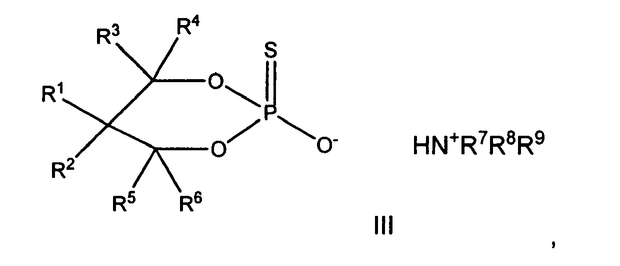 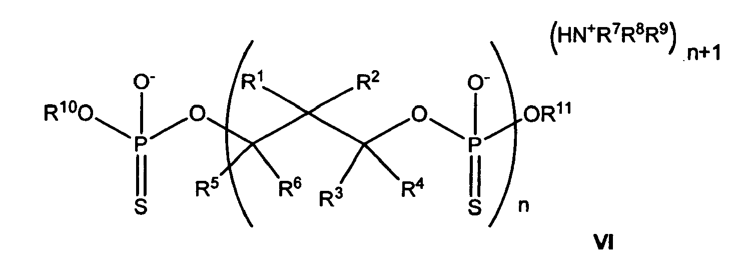 wherein n is an integer from 1 to 5; and
wherein R¹, R², R³, R⁴, R⁵, R⁶, R⁷, R⁸, R⁹, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms. In an aspect, in formula (VI), R¹ and R² can be methyl; R³, R⁴, R⁵, R⁶, R⁷, and R⁸ can be hydrogen; R⁹ can be a tertiary C₁₂₋₁₄ alkyl group; and R¹⁰ and R¹¹ can be alkyl groups comprising from about 1 to about 6 carbon atoms. In an aspect, in formula (III), R³, R⁴, R⁵, R⁶, R⁷, and R⁸ can be hydrogen; R¹ and R² can be methyl; and R⁹ can be a tertiary C₁₂₋₁₄ alkyl group.

Base oils suitable for use in formulating the disclosed compositions can be selected from any of the synthetic or mineral oils or mixtures thereof. Mineral oils include animal oils and vegetable oils (e.g., castor oil, lard oil) as well as other mineral lubricating oils such as liquid petroleum oils and solvent treated or acid-treated mineral lubricating oils of the paraffinic, naphthenic or mixed paraffinic-naphthenic types. Oils derived from coal or shale are also suitable. Further, oils derived from a gas-to-liquid process are also suitable.

The base oil can be present in a major amount, wherein "major amount" is understood to mean greater than or equal to 50%, for example from about 80 to about 98 percent by weight of the lubricant composition.

The base oil typically has a viscosity of, for example, from about 2 to about 15 cSt and, as a further example, from about 2 to about 10 cSt at 100°C. Thus, the base oils can normally have a viscosity in the range of about SAE 50 to about SAE 250, and more usually can range from about SAE 70W to about SAE 140. Suitable automotive oils also include cross-grades such as 75W-140, 80W-90, 85W-140, 85W-90, and the like.

Non-limiting examples of synthetic oils include hydrocarbon oils such as polymerized and interpolymerized olefins (e.g., polybutylenes, polypropylenes, propylene isobutylene copolymers, etc.); polyalphaolefins such as poly(1-hexenes), poly-(1-octenes), poly(1-decenes), etc. and mixtures thereof; alkylbenzenes (e.g., dodecylbenzenes, tetradecylbenzenes, di-nonylbenzenes, di-(2-ethylhexyl)benzenes, etc.); polyphenyls (e.g., biphenyls, terphenyl, alkylated polyphenyls, etc.); alkylated diphenyl ethers and alkylated diphenyl sulfides and the derivatives, analogs and homologs thereof and the like.

Alkylene oxide polymers and interpolymers and derivatives thereof where the terminal hydroxyl groups have been modified by esterification, etherification, etc., constitute another class of known synthetic oils that can be used. Such oils are exemplified by the oils prepared through polymerization of ethylene oxide or propylene oxide, the alkyl and aryl ethers of these polyoxyalkylene polymers (e.g., methyl-polyisopropylene glycol ether having an average molecular weight of about 1000, diphenyl ether of polyethylene glycol having a molecular weight of about 500-1000, diethyl ether of polypropylene glycol having a molecular weight of about 1000-1500, etc.) or mono- and polycarboxylic esters thereof, for example, the acetic acid esters, mixed C₃₋₈ fatty acid esters, or the C₁₃ Oxo acid diester of tetraethylene glycol.

Another class of synthetic oils that can be used includes the esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoether, propylene glycol, etc.) Specific examples of these esters include dibutyl adipate, di(2-ethylhexyl)sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Esters useful as synthetic oils also include those made from C₅₋₁₂ monocarboxylic acids and polyols and polyol ethers such as neopentyl glycol, trimethylol propane, pentaerythritol, dipentaerythritol, tripentaerythritol, etc.

Hence, the base oil used which can be used to make the compositions as described herein can be selected from any of the base oils in Groups I-V as specified in the American Petroleum Institute (API) Base Oil Interchangeability Guidelines. Such base oil groups are as follows:

Group I contain less than 90% saturates and/or greater than 0.03% sulfur and have a viscosity index greater than or equal to 80 and less than 120; Group II contain greater than or equal to 90% saturates and less than or equal to 0.03% sulfur and have a viscosity index greater than or equal to 80 and less than 120; Group III contain greater than or equal to 90% saturates and less than or equal to 0.03% sulfur and have a viscosity index greater than or equal to 120; Group IV are polyalphaolefins (PAO); and Group V include all other basestocks not included in Group I, II, III or IV.

The test methods used in defining the above groups are ASTM D2007 for saturates; ASTM D2270 for viscosity index; and one of ASTM D2622, 4294, 4927 and 3120 for sulfur.

Group IV basestocks, i.e. polyalphaolefins (PAO) include hydrogenated oligomers of an alpha-olefin, the most important methods of oligomerisation being free radical processes, Ziegler catalysis, and cationic, Friedel-Crafts catalysis.

The polyalphaolefins typically have viscosities in the range of 2 to 100 cSt at 100°C., for example 4 to 8 cSt at 100°C. They can, for example, be oligomers of branched or straight chain alpha-olefins having from about 2 to about 30 carbon atoms, non-limiting examples include polypropenes, polyisobutenes, poly-1-butenes, poly-1-hexenes, poly-1-octenes and poly-1-decene. Included are homopolymers, interpolymers and mixtures.

Regarding the balance of the basestock referred to above, a "Group I basestock" also includes a Group I basestock with which basestock(s) from one or more other groups can be admixed, provided that the resulting admixture has characteristics falling within those specified above for Group I basestocks.

Exemplary basestocks include Group I basestocks and mixtures of Group II basestocks with Group I bright stock.

Basestocks suitable for use herein can be made using a variety of different processes including but not limited to distillation, solvent refining, hydrogen processing, oligomerisation, esterification, and re-refining.

The base oil can be an oil derived from Fischer-Tropsch synthesized hydrocarbons. Fischer-Tropsch synthesized hydrocarbons can be made from synthesis gas containing H₂ and CO using a Fischer-Tropsch catalyst. Such hydrocarbons typically require further processing in order to be useful as the base oil. For example, the hydrocarbons can be hydroisomerized using processes disclosed in U.S. Pat. No. 6,103,099 or 6,180,575; hydrocracked and hydroisomerized using processes disclosed in U.S. Pat. No. 4,943,672 or 6,096,940; dewaxed using processes disclosed in U.S. Pat. No. 5,882,505; or hydroisomerized and dewaxed using processes disclosed in U.S. Pat. No. 6,013,171; 6,080,301; or 6,165,949.

Unrefined, refined and rerefined oils, either mineral or synthetic (as well as mixtures of two or more of any of these) of the type disclosed hereinabove can be used in the base oils. Unrefined oils are those obtained directly from a mineral or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives, contaminants, and oil breakdown products.

Optionally, other components can be present in the lubricant composition. Non-limiting examples of other components include antiwear agents, dispersants, diluents, defoamers, demulsifiers, anti-foam agents, corrosion inhibitors, extreme pressure agents, seal well agents, antioxidants, pour point depressants, rust inhibitors and friction modifiers.

Also disclosed herein is a method of lubricating a machine, such as an automotive gear, a stationary gearbox (including an industrial gear), and/or an axle with the disclosed lubricating composition. In a further aspect, there is disclosed a method of improving at least one of antiwear protection and thermal stability in a machine, such as an automotive gear, a stationary gearbox (including an industrial gear), and/or an axle comprising placing the disclosed lubricating composition in the machine, such as an automotive gear, a stationary gearbox (including an industrial gear), and/or an axle. There is also disclosed a method of passing ASTM D6121 and/or ASTM D5704 and/or a method of maintaining GL-5 and/or SAE J2360 performance comprising lubricating a gear and/or axle with the disclosed lubricating composition.

### EXAMPLES

### Example 1 - Lubricant Composition

A lubricant composition was prepared using known techniques and processes. The quantities used to prepare this lubricant composition are provided in Table 1.

**TABLE 1**

| | |
|---|---|
| | |
| Formula III | 0.20-1 |
| Non-borated Succinimide Dispersant | 0.5-2 |
| Borated Succinimide Dispersant | 0.5-2 |
| Base Oil | 40-90 |
| Olefin Copolymer VII (s) | 0-20 |
| Seal Swell Agent (s) | 0-10 |
| EP/AW Agent (s) | 4-6 |
| Pour Point Depressant (s) | 2.5-5 |
| Amine Rust Inhibitor (s) | 1-2 |
| Anti-Foam Agent (s) | 0.1-2 |
| Demulsifier (s) | 0-0.5 |
| Corrosion Inhibitor (s) | 0.1-1 |

### Example 2 - L60-1 Test

Several lubricant compositions were formulated and submitted to the L60-1 test (Oxidation Performance Test: L60-1 (ASTM D5704)). The L60-1 test is designed to test the thermal and oxidative stability of a gear oil. The passing requirements for the L60-1 test are set forth in Table 2.

**Table 2**

| | |
|---|---|
| | |
| Carbon Varnish | 7.5 min |
| Sludge | 9.4 min |
| % Kinematic Viscosity Increase at 100°C | 100 max |
| % Pentane Insolubles | 3% max |
| % Toluene Insolubles | 2% max |

Four formulations were prepared based upon the formulation in Example 1. These formulations were subjected to the ASTM D5704. The results of the test are shown in Table 3.

**Table 3**

| | | |
|---|---|---|
| Formula III / Borated Succinimide Dispersant | PASS | 50 |
| Formula III / Borated Succinimide Dispersant | PASS | 300 |
| Formula III / No Borated Succinimide Dispersant | FAIL | 50 |
| No Formula III / Borated Succinimide Dispersant | FAIL | 50 |
| No Formula III / No Borated Succinimide Dispersant | FAIL | 50 |

As shown above, it can be seen that gear oils containing a salt of a sulfur-containing, phosphorus-containing compound and a boron-containing compound exhibited a passing performance in the ASTM D5704. It is noteworthy that the ASTM D5704 only requires a passing result at 50 hours. However, the test can be modified to 300 hours. The composition of the present disclosure passed the test at this modified level as well.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

It is noted that, as used in this specification and the appended claims, the singular forms "a," "an," and "the," include plural referents unless expressly and unequivocally limited to one referent. Thus, for example, reference to "an antioxidant " includes two or more different antioxidants. As used herein, the term "include" and its grammatical variants are intended to be non-limiting, such that recitation of items in a list is not to the exclusion of other like items that can be substituted or added to the listed items.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications variations, improvements, and substantial equivalents.

**The invention also relates to the following embodiments (1) to (33)**
(1.) A lubricant composition comprising:
   a boron-containing compound; and
   at least one of a sulfur-containing, phosphorus-containing compound and its salt.
(2.) The composition of embodiment (1), further comprising a base oil.
(3.) The composition of embodiment (1), wherein the boron-containing compound is present in the composition in an amount to provide from about 5 ppm to about 500 ppm boron.
(4.) The composition of embodiment (3), wherein the boron-containing compound is present in the composition in an amount to provide from about 11 ppm to about 100 ppm boron.
(5.) The composition of embodiment (2), wherein the base oil is at least one of mineral, and synthetic.
(6.) The composition of embodiment (5), wherein the base oil is a polyalphaolefin.
(7.) The composition of embodiment (5), wherein the base oil is a mixture of mineral and synthetic.
(8.) The composition of embodiment (5), wherein the base oil is a gas-to-liquid oil.
(9.) The composition of embodiment (1), wherein the boron-containing compound is a borated nitrogen-containing compound.
(10.) The composition of embodiment (9), wherein the borated nitrogen-containing compound is a borated succinimide dispersant.
(11.) The composition of embodiment (10), wherein the dispersant is derived from polyisobutylene.
(12.) The composition of embodiment (11), wherein the polyisobutylene has a molecuiar weight of about 1300.
(13.) The composition of embodiment (1), wherein the boron-containing compound is a borated phosphorus-containing compound.
(14.) The composition of embodiment (13), wherein the borated phosphorus-containing compound is a dispersant.
(15.) The composition of embodiment (14), wherein the phosphorus-containing compound is a phosphorus acid.
(16.) The composition of embodiment (1), wherein the sulfur-containing, phosphoruscontaining compound is a compound of formula (II): 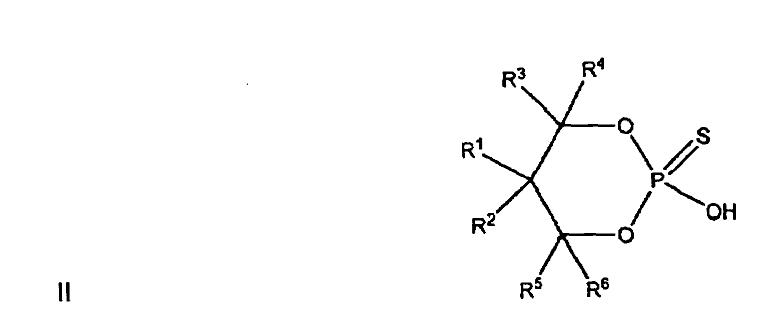 wherein R¹, R², R³, R⁴, R⁵, and R⁶ are independently selected from the group consisting of hydrogen, cyano, and hydrocarbyl groups comprising from about 1 to about 30 carbon atoms.
(17.) The composition of embodiment (16), wherein R¹ and R² are methyl, and R³, R⁴, R⁵, and R⁶ are hydrogen.
(18.) The composition of embodiment (1), wherein the salt of the sulfur-containing, phosphorus-containing compound is a compound of formula (III): 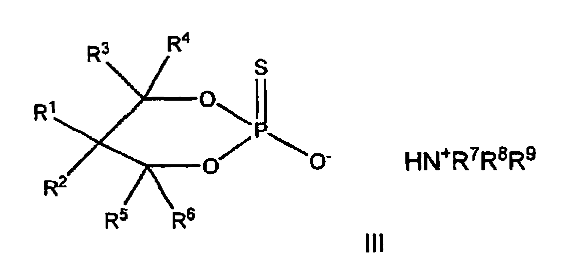 wherein R¹, R², R³, R⁴, R⁵, R⁶, R⁷, R⁸, and R⁹ are independently selected from the group consisting of hydrogen, cyano, and hydrocarbyl groups comprising from about 1 to about 30 carbon atoms.
(19.) The composition of embodiment (18), wherein R¹ and R² are methyl, and R³, R⁴, R⁵, R⁶, R⁷ and R⁸ are hydrogen, and R⁹ is a tertiary C₁₂₋₁₄ alkyl group.
(20.) A method of lubricating an automotive gear comprising using as the lubricant the lubricant composition of embodiment (1).
(21.) A method of improving antiwear protection in an automotive gear comprising placing a lubricant composition according to embodiment (1) in the automotive gear.
(22.) A method of improving thermal stability in an automotive gear comprising placing a lubricant composition according to embodiment (1) in the automotive gear.
(23.) A method of lubricating an axle comprising using as the lubricant the lubricant composition of embodiment (1).
(24.) A method of improving antiwear protection in an axle comprising placing a lubricant composition according to embodiment (1) in the axle.
(25.) A method of improving thermal stability in an axle comprising placing a lubricant composition according to embodiment (1) in the axle.
(26.) A method of lubricating a stationary gearbox comprising using as the lubricant the lubricant composition of embodiment (1).
(27.) A method of improving antiwear protection in a stationary gearbox comprising placing a lubricant composition according to embodiment
   (1) in the stationary gearbox.
(28.) A method of improving thermal stability in a stationary gearbox comprising placing a lubricant composition according to embodiment (1) in the stationary gearbox.
(29.) A method of passing ASTM D5704 comprising lubricating a gear with a lubricant composition according to embodiment (1).
(30.) A method of passing ASTM D5704 for at least about 300 hours comprising lubricating a gear with a lubricant composition according to embodiment (1).
(31.) A method of maintaining GL-5 and/or SAE J2360 performance comprising lubricating a gear with a lubricant composition according to embodiment (1).
(32.) A lubricant composition comprising a boron-containing compound and a reaction product of a sulfur-containing compound, a phosphorus-containing compound, and a nitrogen-containing compound.
(33.) A method of making a lubricant composition comprising blending a boroncontaining compound and at least one of a sulfur-containing, phosphorus-containing compound and its salt.

## Claims

1. A lubricant composition comprising:
a boron-containing compound; and
at least one of a sulfur-containing, phosphorus-containing compound and its salt.

2. The composition of claim 1, further comprising a base oil.

3. The composition of claim 1 or 2, wherein the boron-containing compound is present in the composition in an amount to provide from about 5 ppm to about 500 ppm boron, in particular from about 11 ppm to about 100 ppm boron.

4. The composition of claim 2, wherein the base oil is at least one of mineral, and synthetic.

5. The composition of claim 5, wherein the base oil is selected from the group consisting of a polyalphaolefin, a mixture of mineral and synthetic, and a gas-to-liquid oil.

6. The composition of any one of claims 1 to 5, wherein the boron-containing compound is a borated nitrogen-containing compound, in particular a borated succinimide dispersant.

7. The composition of claim 6, wherein the dispersant is derived from polyisobutylene, in particular wherein the polyisobutylene has a molecular weight of about 1300.

8. The composition of any one of claims 1 to 5, wherein the boron-containing compound is a borated phosphorus-containing compound, in particular a dispersant.

9. The composition of claim 8, wherein the phosphorus-containing compound is a phosphorus acid.

10. The composition of any one of claims 1 to 9, wherein the sulfur-containing, phosphoruscontaining compound is a compound of formula (II): 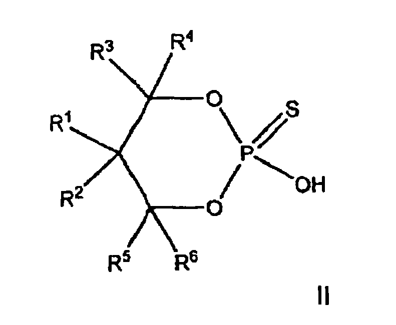 wherein R¹, R², R³, R⁴, R⁵, and R⁶ are independently selected from the group consisting of hydrogen, cyano, and hydrocarbyl groups comprising from about 1 to about 30 carbon atoms.

11. The composition of any one of claims 1 to 10, wherein the salt of the sulfur-containing, phosphorus-containing compound is a compound of formula (III): 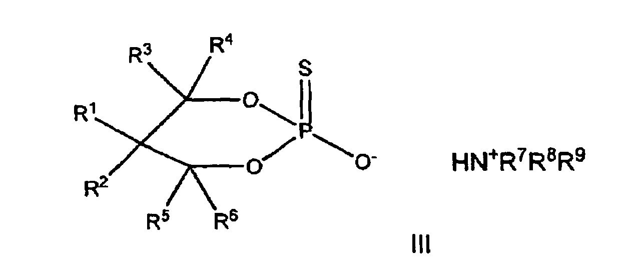 wherein R¹, R², R³, R⁴, R⁵, R⁶, R⁷, R⁸, and R⁹ are independently selected from the group consisting of hydrogen, cyano, and hydrocarbyl groups comprising from about 1 to about 30 carbon atoms.

12. The composition of claims 11 or 12, wherein R¹ and R² are methyl, and R³, R⁴, R⁵, R⁶, R⁷ and R⁸ are hydrogen, and R⁹ is a tertiary C₁₂₋₁₄ alkyl group.

13. A method of lubricating an automotive gear comprising using as the lubricant the lubricant composition of any one of claims 1 to 12.

14. A method of improving antiwear protection and/or thermal stability in an automotive gear comprising placing a lubricant composition according to any one of claims 1 to 12 in the automotive gear.

15. A method of lubricating an axle comprising using as the lubricant the lubricant composition of any one of claims 1 to 12.

16. A method of improving antiwear protection and/or themal stability in an axle comprising placing a lubricant composition according to any of claims 1 to 12 in the axle.

17. A method of lubricating a stationary gearbox comprising using as the lubricant the lubricant composition of any one of claims 1 to 12.

18. A method of improving antiwear protection and/or thermal stability in a stationary gearbox comprising placing a lubricant composition according to any one of claims 1 to 12 in the stationary gearbox.

19. A method of passing ASTM D5704 comprising lubricating a gear with a lubricant composition according to any one of claims 1 to 12.

20. A method according to claim 11 of passing ASTM D5704 for at least about 300 hours.

21. A method of maintaining GL-5 and/or SAE J2360 performance comprising lubricating a gear with a lubricant composition according to any one of claims 1 to 12.

22. A lubricant composition comprising a boron-containing compound and a reaction product of a sulfur-containing compound, a phosphorus-containing compound, and a nitrogen-containing compound.

23. A method of making a lubricant composition comprising blending a boroncontaining compound and at least one of a sulfur-containing, phosphorus-containing compound and its salt.
